# EUROPEAN PATENT SPECIFICATION

(11) **EP 3 644 560 B1**
(45) Date of publication and mention of the grant of the patent: **07.06.2023**
(21) Application number: 18819830.3
(22) Date of filing: 22.06.2018
(51) Int. Cl.: H04L 51/043, G06F 16/245, G06F 16/903, H04L 51/52

(54) **INFORMATION PROCESSING METHOD BASED ON CONVERGED COMMUNICATION, AND SERVER AND TERMINAL**
INFORMATIONSVERARBEITUNGSVERFAHREN AUF BASIS VON KONVERGIERTER KOMMUNIKATION SOWIE SERVER UND ENDGERÄT
PROCÉDÉ DE TRAITEMENT D'INFORMATIONS BASÉ SUR UNE COMMUNICATION CONVERGENTE, ET SERVEUR ET TERMINAL

(30) Priority: 22.06.2017 CN 201710480712
(43) Date of publication of application: 29.04.2020
(73) Proprietor: ZTE Corporation, Shenzhen, Guangdong 518057 (CN)
(72) Inventor: QIAN, Chunxiao, Shenzhen Guangdong 518057 (CN); LIU, Jun, Shenzhen Guangdong 518057 (CN); WANG, Xianguang, Shenzhen Guangdong 518057 (CN)
(74) Representative: Canzler & Bergmeier Patentanwälte Partnerschaft mbB
(86) International application number: PCT/CN2018/092464
(87) International publication number: WO 2018/233701

(56) References cited:
- CN-A- 102 137 163
- CN-A- 102 999 527
- CN-A- 102 999 527
- CN-A- 105 046 547
- US-A1- 2013 054 694
- US-A1- 2014 143 675
- KULDEEP SINGH ET AL: "CSNA: A Social networking solution for RCS and mobile user", INTELLIGENCE IN NEXT GENERATION NETWORKS (ICIN), 2011 15TH INTERNATIONAL CONFERENCE ON, IEEE, 4 October 2011 (2011-10-04), pages 191-195, XP032010060, DOI: 10.1109/ICIN.2011.6081072 ISBN: 978-1-61284-319-3
- Tom Van Pelt ET AL: "GSMA Rich Communication Suite 6.0, Advanced Communications Services and Client Specification, Version 7.0", GSM Association Non-confidential Official Document RCC.07 - Rich Communication Suite 6.0 Advanced Communications Services and Client Specification, 21 March 2016 (2016-03-21), pages 1-565, XP055762296, GB Retrieved from the Internet: URL:https://www.gsma.com/futurenetworks/wp -content/uploads/2019/09/RCC.07-v7.0.pdf

## Description

### TECHNICAL FIELD

The present disclosure relates to the field of communications, in particular to a Rich Communication Suite (RCS)-based information processing method, a server and a terminal.

### BACKGROUND

Rich Communication Suite (RCS) is a new communication mode in which the internet technology is integrated with the conventional communication technology. One of the powerful functions of RCS is circle, such as a friend circle or a communication circle. A registered user of the RCS may release status information based on a circle application platform of the RCS where friends in a contact list of the registered user can view the status information released by the registered user. The status information includes text information, picture information, audio information, video information and the like.

Currently, a user can only view status information released on a circle application platform by friends in the contact list of the user. However, when the user needs to view some specific information on the circle application platform, he/she cannot obtain sufficient status information related to the specific information from the status information released by his/her friends in the contact list because the status information released by the friends in the contact list is limited. It can be seen that the current status information viewing process based on RCS has the problem of few viewable objects. A non-patent document "KULDEEP SINGH ET AL: "CSNA: A Social networking solution for RCS and mobile user", INTELLIGENCE IN NEXT GENERATION NETWORKS (ICIN), 2011 15TH INTERNATIONAL CONFERENCE ON, IEEE, 4 October 2011" discloses a CSNA [Community and Social Network Aggregator] solution that allows aggregating rich communication into one single point of entry for the end user (the RCS client, the Mobile Phone Users) and allowing operators to anchor the communication/messaging initiation. The integration for CSNA solution will involve integration of IMS with Facebook, Gtalk and other social networks, synchronizing all contacts with rich presence address book in the client and other RCS capabilities such as IM, file sharing etc. The CSNA solution provides opportunity to tap the revenue from the ever increasing subscriber base on Social networking for Telco operator to rollout new services using CSNA solution. Using CSNA, Telco operators can tap into huge subscriber base of social network addicts and migrate them to RCS enabled solution providing rich communication experience for subscribers. A Chinese patent application publication No. CN102999527A relates to a dynamic information pushing method and a dynamic information pushing system in an SNS (social networking services) network. The method comprises the following steps of: acquiring the friend dynamic information of a first user and recording the friend dynamic information of the first user in the primary dynamic information table of the first user; acquiring the friend dynamic information of a second user and recording the friend dynamic information of the second user in the primary dynamic information table of the second user, so that the first user and the second user mutually become friends; creating the secondary dynamic information table of the first user; comparing the primary dynamic information table of the first user and the primary dynamic information table of the second user with the secondary dynamic information table of the first user, and acquiring update data of the primary dynamic information table of the first user and the primary dynamic information table of the second user; and updating the update data in the secondary dynamic information table of the first user. Due to the dynamic information pushing method and the dynamic information pushing system in the SNS network, the range of shared dynamic resource information is widened. A U.S. patent application publication No. US 2014/0143675A1 discloses a method of providing contact information through an interworking between a messaging service and another service, the method including: receiving a preference of a user from an application client by an application server; receiving a request for a list of new contacts from the application client; transferring the request for the list of the new contacts to an interworking server; receiving a profile of the contact from a service provider through the interworking server; filtering the received profile of the contact; and transferring a list of filtered contacts to the application client. A U.S. patent application publication No. US 2013/0054694A1 discloses that an IMS includes a terminal and an Internet Protocol Multimedia Subsystem (IMS) server, and may perform a method for transmitting and receiving presence information via the IMS core unit, a registering unit, a presence information transmitting unit, a friend list unit and a presence information control unit. The IMS core unit processes an IMS protocol. The registering unit registers terminal information to the IMS server. The presence information transmitting unit transmits presence information to the IMS server. The friend list unit manages a friend list of the various terminals.

The presence information control unit designates at least one friend in the friend list and requests presence information of the designated friend.

Tom Van Pelt ET AL: "GSMA Rich Communication Suite 6.0, Advanced Communications Services and Client Specification, Version 7.0", GSM Association Non-confidential Official Document RCC.07 - Rich Communication Suite 6.0 Advanced Communications Services and Client Specification, 21 March 2016 discloses social presence information where having established a social presence relationship with a certain contact, the social presence information is visible from an Enhanced Address Book (EAB). In addition a general geolocation sharing is disclosed.

### SUMMARY

The features of the method, server, terminal, and computer readable storage medium according to the present invention are defined in the independent claims, and the preferable features according to the present invention are defined in the dependent claims.

### BRIEF DESCRIPTION OF DRAWINGS

Fig. 1 is an organization relationship diagram of RCS according to an embodiment of the present disclosure.
Fig. 2 is a flowchart of an RCS-based information processing method according to an embodiment of the present disclosure.
Fig. 3 is a flowchart of another RCS-based information processing method according to an embodiment of the present disclosure.
Fig. 4 is a flowchart of another RCS-based information processing method according to an embodiment of the present disclosure.
Fig. 5 is a schematic structural diagram of a server according to an embodiment of the present disclosure.
Fig. 6 is a schematic structural diagram of a processing module in a server according to an embodiment of the present disclosure.
Fig. 7 is a schematic structural diagram of a terminal according to an embodiment of the present disclosure.
Fig. 8 is a schematic structural diagram of another server according to an embodiment of the present disclosure.
Fig. 9 is a schematic structural diagram of another terminal according to an embodiment of the present disclosure.

### DETAILED DESCRIPTION

For clarity and better understanding of the technical problems to be solved, the technical solutions and advantages of the disclosure, the disclosure will be further described in detail in conjunction with the accompanying drawings and specific embodiments.

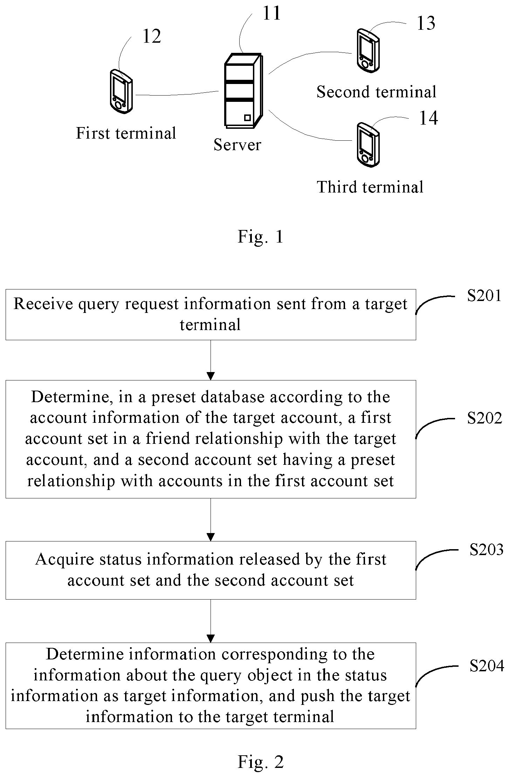

As shown in Fig. 1, an organization relationship diagram of RCS according to an embodiment of the present disclosure is shown. The RCS involves a server 11, a first terminal 12, a second terminal 13 and a third terminal 14. The first terminal 12 is a terminal on which a first account is logged in, the second terminal 13 is a terminal on which a second account is logged in, and the third terminal 14 is a terminal on which a third account is logged in.

For example, in the RCS shown in Fig. 1, the first account and the second account are in a friend relationship, the second account and the third account are in a friend relationship, and the first account and the third account are in a non-friend relationship. Through the RCS-based information processing method provided in the embodiment of the disclosure, the first terminal 12 on which the first account is logged in can view status information released by the second account and the third account.

As shown in Fig. 2, in an embodiment of the present disclosure, there is provided an RCS-based information processing method. The method includes the following steps S201-S204.

At step S201, query request information sent from a target terminal is received.

In this step, query request information sent from the target terminal may be received. The target terminal is a terminal on which a target account is logged in, and the query request information includes account information of the target account and information about a query object.

It should be noted that the query request information may further include information about a query time. For example, a time limit may be set to query status information of the last week. The user may set the time limit manually according to actual conditions, or may set a default limit, for example, a default limit set to be the last three days.

At step S202, a first account set in a friend relationship with the target account, and a second account set having a preset relationship with accounts in the first account set are determined in a preset database according to the account information of the target account.

In this step, after the query request information sent from the target terminal is received, a first account set in a friend relationship with the target account, and a second account set having a preset relationship with accounts in the first account set may be determined in a preset database in the server according to the account information of the target account in the query request information.

The second account set may be a first account subset in a friend relationship with the accounts in the first account set, i.e., the accounts in the second account set and the target account are in a "friend of friends" relationship. In addition, the second account set may also be a second account subset in a friend relationship with accounts in the first account subset, i.e., the accounts in the second account set and the target account are in a "friend of friends' friends" relationship.

In this way, compared with the case where the target account can only view status information released by friends of the target account itself, the embodiment of the disclosure provides a method with which the target account can view not only status information released by friends of the target account itself, but also status information released by friends of friends, and even status information released by friends of friends' friends, which greatly increases the status information available to the target account.

It should be noted that the user may be allowed to set privacy levels of the status information out of privacy considerations. For example, the privacy level may be set to "visible to friends of friends", but "not visible to friends of friends' friends". The privacy level may also be set individually for certain friends.

For example, the following scenario may exist: a friend of an RCS account A, namely an RCS account B, releases a piece of status information with a privacy level of visible only to friends; an RCS account C, in a friend relationship with the RCS account B, releases a piece of status information with a privacy level of visible to friends and friends of friends; and an RCS account D, in a friend relationship with the RCS account B, releases a piece of status information with a privacy level of visible only to friends.

In the above scenario, the RCS account A and the RCS account B are in a friend relationship, and the privacy level set by the RCS account B is visible only to friends; the RCS account A and the RCS account C are in a non-friend relationship, and the privacy level set by the RCS account C is visible to friends and friends of friends; and the RCS account A and the RCS account D are in a non-friend relationship, and the privacy level set by the RCS account D is visible only to friends. Therefore, the RCS account A can view status information released by the RCS account B and the RCS account C, but cannot view status information released by the RCS account D.

At step S203, status information released by the first account set and the second account set is acquired.

In this step, the status information released by the first account set and the second account set determined in step S202 may be acquired from a preset storage in the server.

When the query request information includes information about a query time, the status information released by the first account set and the second account set may be acquired according to the information about the query time. For example, when the query limit is one week, the status information released by the first account set and the second account set in the last week may be acquired. Therefore, only the latest status information may be acquired, thereby effectively reducing the calculation amount of the server and prolonging the service life of the server.

At step S204, information corresponding to the information about the query object in the status information is determined as target information and pushed to the target terminal.

In this step, information corresponding to the information about the query object may be acquired from the status information released by the first account set and the second account set, and determined as the target information to be pushed to the target terminal and viewed by a user logins in the target account on the target terminal.

For example, when the information about the query object is food, information related to the food may be acquired from the status information released by the first account set and the second account set, and determined as the target information to be pushed to the target terminal and viewed by a user logins in the target account on the target terminal.

In the embodiment of the present disclosure, the method as described above may be applied to a server.

In the RCS-based information processing method described in the embodiments of the present disclosure, query request information sent from a target terminal is received; a first account set in a friend relationship with the target account, and a second account set having a preset relationship with accounts in the first account set are determined in a preset database according to the account information of the target account; status information released by the first account set and the second account set is acquired; and information corresponding to the information about the query object in the status information is determined as target information and pushed to the target terminal. By the RCS-based information processing method as described above, the account set viewable by the target account can be expanded, so that the status information available to the target account is greatly increased, and the target account can acquire corresponding target information from more viewable status information.

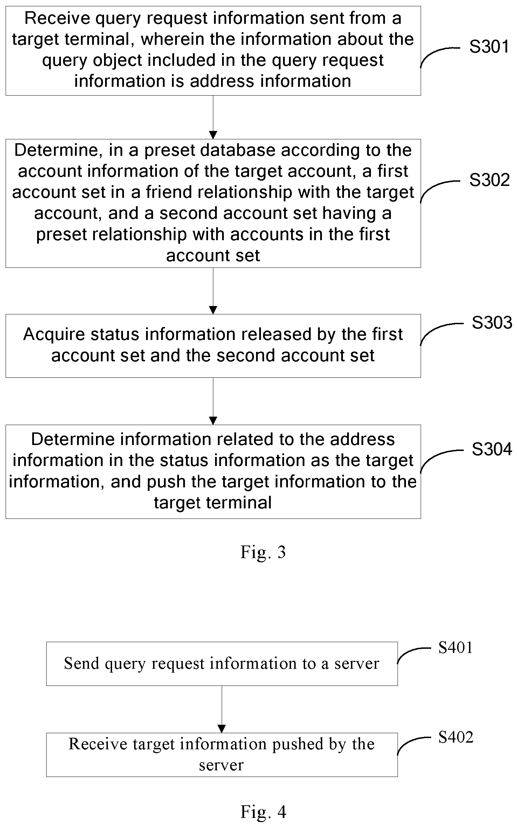

As shown in Fig. 3, in an embodiment of the present disclosure, there is further provided an RCS-based information processing method. The method includes the following steps S301-S304.

At step S301, query request information sent from a target terminal is received, wherein the information about the query object included in the query request information is address information.

In this step, query request information sent from the target terminal may be received. The target terminal is a terminal on which a target account is logged in, and the query request information includes account information of the target account and information about a query object. In an embodiment, the information about the query object included in the query request information is address information.

It should be noted that the query request information may further include information about a query time. For example, a time limit may be set to query status information of the last week. The user may set the time limit manually according to actual conditions, or may set a default limit, for example, a default limit set to be the last three days.

At step S302, a first account set in a friend relationship with the target account, and a second account set having a preset relationship with accounts in the first account set are determined in a preset database according to the account information of the target account.

In this step, after the query request information sent from the target terminal is received, a first account set in a friend relationship with the target account, and a second account set having a preset relationship with accounts in the first account set may be determined in a preset database in the server according to the account information of the target account in the query request information.

The second account set may be a first account subset in a friend relationship with the accounts in the first account set, i.e., the accounts in the second account set and the target account are in a "friend of friends" relationship. In addition, the second account set may also be a second account subset in a friend relationship with accounts in the first account subset, i.e., the accounts in the second account set and the target account are in a "friend of friends' friends" relationship.

In this way, compared with the case where the target account can only view status information released by friends of the target account itself, the embodiment of the disclosure provides a method with which the target account can view not only status information released by friends of the target account itself, but also status information released by friends of friends, and even status information released by friends of friends' friends, which greatly increases the status information available to the target account.

At step S303, status information released by the first account set and the second account set is acquired.

In this step, according to the first account set and the second account set determined in step S302, the status information released by the first account set and the second account set may be acquired from a preset storage in the server.

When the query request information includes information about a query time, the status information released by the first account set and the second account set may be acquired according to the information about the query time. For example, when the query limit is one week, the status information released by the first account set and the second account set in the last week may be acquired. Therefore, only the latest status information may be acquired, thereby effectively reducing the calculation amount of the server and prolonging the service life of the server.

At step S304, information related to the address information in the status information is determined as the target information and pushed to the target terminal.

In this step, in a case where the information about the query object is address information, information related to the address information in the status information released by the first account set and the second account set may be determined as the target information.

For example, if the user of the target account wants to go to "Place B" for vacation and wants to learn about "Place B", the address information of "Place B" may be sent to the server, that is, the information about the query object is the address information of "Place B". During the process of determining the target information using the address information of "Place B" (i.e., information about the query object), some geographical location information of "Place B" and information about "Place B", such as pictures and words, associated with the geographical location information may be acquired from the status information released by the first account set and the second account set. The geographical location information may be referred to as first geographical location information. The geographical location information may be information about latitude and longitude, a landmark building, or a scenic spot. Meanwhile, the address information of "Place B" may also be sent to a geographical location system, so as to obtain geographical location information, which may be referred to as second geographical location information, of "Place B" through the geographical location system. The geographical location system may be a third-party application module or an application module built by the server itself. Then, by performing matching and calculation on the second geographical location information and the first geographical location information, some status information (e.g., information such as pictures and words) most related to "Place B" may be acquired and determined as the target information.

After the target information is determined, the determined target information may be pushed to the target terminal and viewed by a user logins in the target account on the target terminal.

In an embodiment, in a case where the information about the query object is information about a self-driving route, address information of respective nodes on the self-driving route may be acquired, and information related to the address information of the respective nodes on the self-driving route in the status information may be determined as the target information.

For example, if the user of the target account wants to drive from "Place A" to "Place B" and wants to know traffic information on the self-driving route, such as whether the traffic is heavy, weather conditions, and the like, information about the self-driving route from "Place A" to "Place B" may be sent to the server, that is, the information about the query object is the information about the self-driving route from "Place A" to "Place B". The address information of Place A and Place B may be sent to a geographical location system. The geographical location system may be a third-party application module or an application module built by the server itself. The optimal self-driving route from "Place A" to "Place B" and the address information of respective nodes on the optimal self-driving route may be acquired through the geographical location system. Then, information related to address information of the respective nodes on the optimal self-driving route may be obtained from the status information released by the first account set and the second account set and determined as the target information. The process of determining the information related to the address information of the respective nodes on the optimal self-driving route as the target information may refer to, for example, the process of determining the target information using the address information of "Place B" (i.e., the information about the query object) as described above.

It should be noted that the location of the respective nodes on the self-driving route may be a location of a city or a scenic spot. The user of the target terminal may also set a node location at intervals, for example, set a node location every 5 kilometers.

In the embodiment of the present disclosure, by the RCS-based information processing method as described above, the account set viewable by the target account can be expanded, so that the status information available to the target account is greatly increased, and the target account can acquire target information corresponding to the address information from more viewable status information.

As shown in Fig. 4, in an embodiment of the present disclosure, there is further provided an RCS-based information processing method including the following steps S401 to S402.

At step S401, query request information is sent to a server.

In this step, query request information may be sent to a server. The query request information includes account information of the target account and information about a query object.

It should be noted that the query request information may further include information about a query time. For example, a time limit may be set to query status information of the last week. The user may set a query time limit manually according to actual conditions, or may set a default limit, for example, a default limit set to be the last three days.

At step S402, target information pushed by the server is received.

In this step, target information pushed by the server is received. The target information is information corresponding to the information about the query object in status information released by a first account set and a second account set, the first account set is an account set determined in a preset database that has a friend relationship with the target account, and the second account set is an account set determined in the preset database that has a preset relationship with accounts in the first account set.

The second account set may be a first account subset in a friend relationship with the accounts in the first account set, i.e., the accounts in the second account set and the target account are in a "friend of friends" relationship. In addition, the second account set may also be a second account subset in a friend relationship with accounts in the first account subset, i.e., the accounts in the second account set and the target account are in a "friend of friends' friends" relationship.

In this way, compared with the case where the target account can only view status information released by friends of the target account itself, the embodiment of the disclosure provides a method with which the target account can view not only status information released by friends of the target account itself, but also status information released by friends of friends, and even status information released by friends of friends' friends, which greatly increases the status information available to the target account.

It should be noted that when the information about the query object is address information, information related to the address information in the status information released by the first account set and the second account set may be determined as the target information. When the information about the query object is information about a self-driving route, by acquiring address information of respective nodes on the self-driving route, information related to the address information of the respective nodes on the self-driving route in the status information released by the first account set and the second account set may be determined as the target information.

It should be noted that the user may be allowed to set privacy levels of the status information out of privacy considerations. For example, the privacy level may be set to "visible to friends of friends", but "not visible to friends of friends' friends". The privacy level may also be set individually for certain friends.

For example, the following scenario may exist: a friend of an RCS account A, namely an RCS account B, releases a piece of status information with a privacy level of visible only to friends; an RCS account C, in a friend relationship with the RCS account B, releases a piece of status information with a privacy level of visible to friends and friends of friends; and an RCS account D, in a friend relationship with the RCS account B, releases a piece of status information with a privacy level of visible only to friends.

In the above scenario, the RCS account A and the RCS account B are in a friend relationship, and the privacy level set by the RCS account B is visible only to friends; the RCS account A and the RCS account C are in a non-friend relationship, and the privacy level set by the RCS account C is visible to friends and friends of friends; and the RCS account A and the RCS account D are in a non-friend relationship, and the privacy level set by the RCS account D is visible only to friends. Therefore, the RCS account A can view status information released by the RCS account B and the RCS account C, but cannot view status information released by the RCS account D.

In the embodiment of the present disclosure, the method described above may be applied to a terminal. The terminal is a terminal on which a target account is logged in, including, for example, but not limited to a mobile phone, a tablet, a personal digital assistant, a laptop, an on-board computer, a desktop computer, a set-top box, a smart television, or a wearable device.

In the RCS-based information processing method described in the embodiments of the present disclosure, query request information is sent to a server, wherein the query request information includes account information of the target account and information about a query object; and target information pushed by the server is received, wherein the target information is information corresponding to the information about the query object in status information released by a first account set and a second account set, the first account set is an account set determined in a preset database that has a friend relationship with the target account, and the second account set is an account set determined in the preset database that has a preset relationship with accounts in the first account set. By the RCS-based information processing method as described above, the account set viewable by the target account can be expanded, so that the status information available to the target account is greatly increased, and the target account can acquire corresponding target information from more viewable status information.

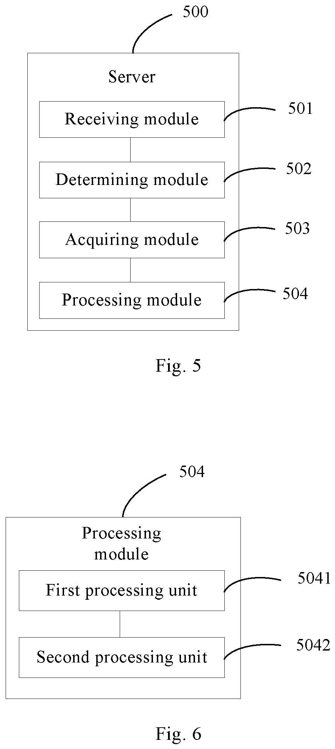

As shown in Fig. 5, in an embodiment of the present disclosure, there is provided a server 500, including a receiving module 501, a determining module 502, an acquiring module 503, and a processing module 504.

The receiving module 501 is configured to receive query request information sent from a target terminal, wherein the target terminal is a terminal on which a target account is logged in, and the query request information includes account information of the target account and information about a query object.

The determining module 502 is configured to determine, in a preset database according to the account information of the target account, a first account set in a friend relationship with the target account, and a second account set having a preset relationship with accounts in the first account set.

The acquiring module 503 is configured to acquire status information released by the first account set and the second account set.

The processing module 504 is configured to determine information corresponding to the information about the query object in the status information as target information, and push the target information to the target terminal.

In an embodiment, the second account set includes a first account subset in a friend relationship with the accounts in the first account set. In an embodiment, the second account set further includes a second account subset in a friend relationship with accounts in the first account subset.

As shown in Fig. 6, the processing module 504 includes a first processing unit 5041 and a second processing unit 5042.

The first processing unit 5041 is configured to determine, in a case where the information about the query object is address information, information related to the address information in the status information as the target information.

The second processing unit 5042 is configured to acquire, in a case where the information about the query object is information about a self-driving route, address information of respective nodes on the self-driving route, and determine information related to the address information of the respective nodes on the self-driving route in the status information as the target information.

In an embodiment, the query request information further includes information about a query time, and the target information is information corresponding to the information about the query object in the status information within the query time.

The server 500 can implement the RCS-based information processing method as shown in Figs. 2 and 3, and can achieve the same technical effects.

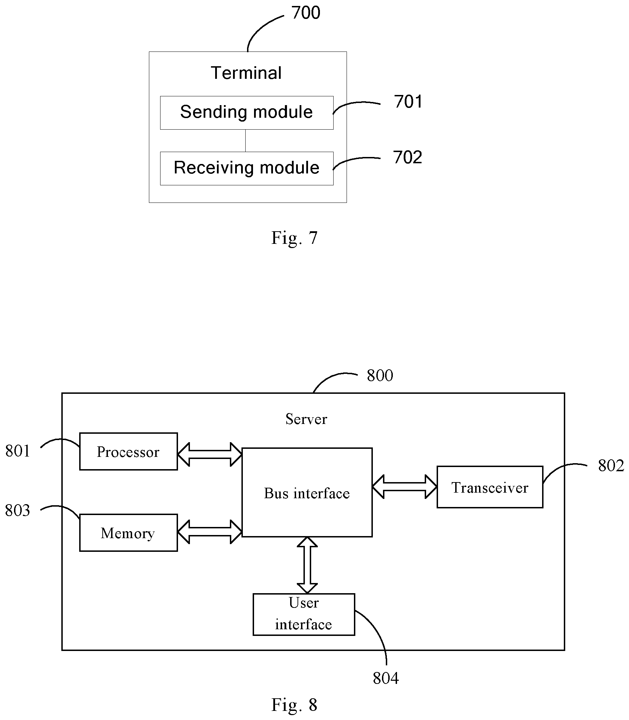

As shown in Fig. 7, in an embodiment of the present disclosure, there is provided a terminal 700, including a sending module 701 and a receiving module 702.

The sending module 701 is configured to send query request information to a server, wherein the query request information includes account information of the target account and information about a query object.

The receiving module 702 is configured to receive target information pushed by the server, wherein the target information is information corresponding to the information about the query object in status information released by a first account set and a second account set, the first account set is an account set determined in a preset database that has a friend relationship with the target account, and the second account set is an account set determined in the preset database that has a preset relationship with accounts in the first account set.

In an embodiment, the second account set includes a first account subset in a friend relationship with the accounts in the first account set. In an embodiment, the second account set further includes a second account subset in a friend relationship with accounts in the first account subset.

In an embodiment, in a case where the information about the query object is address information, the target information is information related to the address information in the status information; and in a case where the information about the query object is information about a self-driving route, the target information is information related to address information of respective nodes on the self-driving route in the status information.

In an embodiment, the query request information further includes information about a query time, and the target information is information corresponding to the information about the query object in the status information within the query time.

The terminal 700 can implement the RCS-based information processing method as shown in Fig. 4, and can achieve the same technical effects.

Fig. 8 is a schematic structural diagram of a server according to an embodiment of the present disclosure. As shown in Fig. 8, the server 800 includes: a processor 801, a transceiver 802, a memory 803, a user interface 804 and a bus interface. The bus interface is an interface between components interconnected via a bus in a bus architecture.

In Fig. 8, the bus architecture may include any number of interconnected buses and bridges to link together various circuits, such as one or more processors represented by the processor 801 and one or more memories represented by the memory 803. The bus architecture may also link various other circuits such as peripherals, voltage regulators, power management circuits, and the like; these are well known in the art and, therefore, will not be described further herein. The transceiver 802 may include a transmitter and a receiver for communication with various other apparatus over a transmission medium. Depending on different kinds of user equipment, the user interface 804 may be an interface enabling internal or external connection with a required device. The device includes, but is not limited to, a keypad, a display, a speaker, a microphone, a joystick, etc.

The processor 801 is configured to read a program stored in the memory 803 and, when executing the program, cause the RCS-based information processing method as shown in Figs. 2 and 3 to be implemented. The processor 801 is also responsible for bus architecture management and general processing, and the memory 803 may store data used by the processor 801 during operations.

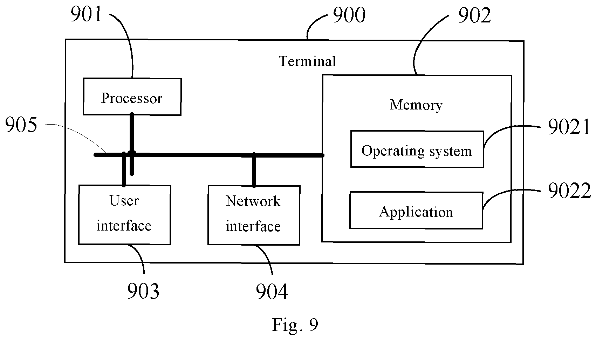

In summary, the server 800 can implement the RCS-based information processing method as provided in the embodiments shown in Figs. 2 and 3, and can achieve the same technical effects. To avoid repetition, the method is not described herein. Fig. 9 is a schematic structural diagram of a terminal according to an embodiment of the present disclosure. As shown in Fig. 9, a terminal 900 includes: at least one processor 901, a memory 902, at least one network interface 904, a user interface 903, and a bus system 905.

In Fig. 9, various components in the terminal 900 are coupled together by the bus system 905 for connection and communication between these components. The bus system 905 includes a power bus, a control bus, and a status signal bus in addition to a data bus. However, for clarity of illustration, the various busses are shown jointly in Fig. 9 as the bus system 905.

The user interface 903 may include a display, a keyboard or a pointing device (e.g., a mouse, a trackball, a touchpad, or a touch screen, among others).

The memory 902 may be a volatile memory or a non-volatile memory, or may include both a volatile memory and a non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), such as: a Static RAM (SRAM), a Dynamic RAM (DRAM), a Synchronous DRAM (SDRAM), a Double Data Rate SDRAM (DDRSDRAM), an Enhanced SDRAM (ESDRAM), a Synch Link DRAM (SLDRAM), and a Direct Rambus RAM (DRRAM). The RAM may be used as an external cache. The memory 902 of the system and the method described herein is intended to include, but not limited to, these and any other suitable types of memory.

In some implementations, the memory 902 includes an operating system 9021 and an application 9022. The operating system 9021 and the application 9022 may be executable modules or data structures, or subsets thereof, or extended sets thereof.

The operating system 9021 may include various system programs, such as a framework layer, a core library layer, a driving layer, so as to implement various basic services and process hardware-based tasks. The application 9022 may include various applications such as a Media Player, a Browser, so as to implement various application services. A program for implementing the RCS-based information processing method as shown in the embodiments of the present disclosure may be contained in the application 9022.

The processor 901 may be configured to call a program or instruction stored in the memory 902 (for example, call a program or instruction stored in the application 9022), and , when the processor 901 executes the program, the RCS-based information processing method as shown in Fig. 4 is caused to be implemented.

In short, the terminal 900 can implement the RCS-based information processing method as shown in Fig. 4, and can achieve the same technical effects. To avoid repetition, the method is not described herein.

In an embodiment of the present disclosure, there is further provided a computer readable storage medium storing a computer program thereon which, when executed by a processor, causes steps of embodiments of the RCS-based information processing method applied to a server to be implemented and achieve the same technical effects. To avoid repetition, the method is not described herein.

In an embodiment of the present disclosure, there is further provided a computer readable storage medium storing a computer program thereon which, when executed by a processor, causes steps of embodiments of the RCS-based information processing method applied to a terminal to be implemented and achieve the same technical effects. To avoid repetition, the method is not described herein.

The processor described herein may be a general-purpose processor, a Digital Signal Processor (DSP), an Application Specific Integrated Circuit (ASIC), a Field Programmable Gate Array (FPGA) or other programmable logic devices, discrete gates or transistor logic devices, or discrete hardware components that may implement or perform the methods, steps, and logic blocks in embodiments of the present disclosure. The general purpose processor may be a microprocessor, or the processor may be any conventional processor or the like.

It will be appreciated that the RCS-based information processing methods described herein can be implemented by hardware, software, firmware, middleware, microcode, or a combination thereof. For a hardware implementation, the processing unit may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), general purpose processors, controllers, microcontrollers, microprocessors, other electronic units for executing the functions in the present application, or a combination thereof. For a software implementation, the RCS-based information processing methods described herein may be implemented by modules (e.g., procedures, functions, and so on) that perform the functions described herein. Software codes may be stored in a memory and executed by a processor.

The foregoing is illustrative implementations of the present disclosure, and it should be noted that modifications and substitutions may be made by those skilled in the art without departing from the scope of the present invention as defined by the appended claims.

## Claims

1. A Rich Communication Suite, RCS, -based information processing method, which is applied to a server and comprises following steps:
receiving (S201) query request information sent from a target terminal, wherein the target terminal is a terminal on which a target account is logged in, and the query request information comprises account information of the target account and information about a query object;
determining (S202), in a preset database according to the account information of the target account, a first account set in a friend relationship with the target account, and a second account set having a preset relationship with accounts in the first account set;
acquiring (S203) status information released by the first account set and the second account set; and
determining (S204) information corresponding to the information about the query object in the status information as target information, and pushing (S204) the target information to the target terminal,
wherein the second account set comprises a first account subset in a friend relationship with the accounts in the first account set,
**characterized in that**, the second account set further comprises a second account subset in a friend relationship with accounts in the first account subset,
the information about the query object is information about a self-driving route and the step of determining (S204) information corresponding to the information about the query object in the status information as target information comprises:
acquiring address information of respective nodes on the self-driving route, and determining information related to the address information of the respective nodes on the self-driving route in the status information as the target information.

2. The method according to claim 1, wherein the query request information further comprises information about a query time, and the target information is information corresponding to the information about the query object in the status information within the query time.

3. A Rich Communication Suite, RCS, -based information processing method, which is applied to a terminal on which a target account is logged in and comprises following steps:
sending (S401) query request information to a server, wherein the query request information comprises account information of the target account and information about a query object; and
receiving (S402) target information pushed by the server, wherein the target information is information corresponding to the information about the query object in status information released by a first account set and a second account set, the first account set is an account set determined in a preset database that has a friend relationship with the target account, and the second account set is an account set determined in the preset database that has a preset relationship with accounts in the first account set,
wherein the second account set comprises a first account subset in a friend relationship with the accounts in the first account set,
**characterized in that**, the second account set further comprises a second account subset in a friend relationship with accounts in the first account subset.
the information about the query object is information about a self-driving route, and receiving (S402) target information pushed by the server comprises receiving information related to address information of respective nodes on the self-driving route in the status information.

4. The method according to claim 3, wherein the query request information further comprises information about a query time, and the target information is information corresponding to the information about the query object in the status information within the query time.

5. A server (800), comprising a memory (803), a processor (801), and a computer program stored in the memory (803) and executable by the processor (801), wherein the processor (801) executes the program to implement the RCS-based information processing method according to any one of claims 1 to 2.

6. A terminal (900), comprising a memory (902), a processor (901), and a computer program stored in the memory (902) and executable by the processor (901), wherein the processor (901) executes the program to implement the RCS-based information processing method according to any one of claims 3 to 4.

7. A computer readable storage medium storing a computer program thereon, wherein the program is executed by a processor to cause the RCS-based information processing method according to any one of claims 1 to 4 to be implemented.

## Patentansprüche

1. Informationsverarbeitungsverfahren basierend auf der Rich-Communication-Suite, RCS, das auf einen Server angewendet wird und folgende Schritte umfasst:
Empfangen (S201) von Abfrageanforderungsinformationen, die von einem Zielendgerät gesendet werden, wobei das Zielendgerät ein Endgerät ist, an dem ein Zielkonto angemeldet ist, und die Abfrageanforderungsinformationen Kontoinformationen des Zielkontos und Informationen über ein Abfrageobjekt umfassen;
Bestimmen (S202), in einer voreingestellten Datenbank gemäß den Kontoinformationen des Zielkontos, eines ersten Kontosatzes in einer Freundschaftsbeziehung mit dem Zielkonto und eines zweiten Kontosatzes, der eine voreingestellte Beziehung mit Konten in dem ersten Kontosatz hat;
Erfassen (S203) von Statusinformationen, die von dem ersten Kontosatz und dem zweiten Kontosatz freigegeben werden; und
Bestimmen (S204) von Informationen, die den Informationen über das Abfrageobjekt in den Statusinformationen entsprechen, als Zielinformationen, und Übertragen (S204) der Zielinformationen zu dem Zielendgerät,
wobei der zweite Kontensatz einen ersten Kontenuntersatz in einer Freundschaftsbeziehung mit den Konten in dem ersten Kontensatz umfasst,
**dadurch gekennzeichnet, dass** der zweite Kontensatz ferner einen zweiten Kontenuntersatz umfasst, der in einer Freundschaftsbeziehung zu Konten im ersten Kontenuntersatz steht,
die Informationen über das Abfrageobjekt Informationen über eine selbstfahrende Route sind und der Schritt des Bestimmens (S204) der Informationen, die den Informationen über das Abfrageobjekt in den Statusinformationen entsprechen, als Zielinformationen umfasst:
Erfassen von Adressinformationen entsprechender Knoten auf der selbstfahrenden Route, und Bestimmen von Informationen, die sich auf die Adressinformationen der entsprechenden Knoten auf der selbstfahrenden Route beziehen, in den Statusinformationen als die Zielinformationen.

2. Verfahren nach Anspruch 1, wobei die Abfrageanforderungsinformationen ferner Informationen über eine Abfragezeit umfassen und die Zielinformationen Informationen sind, die den Informationen über das Abfrageobjekt in den Statusinformationen innerhalb der Abfragezeit entsprechen.

3. Informationsverarbeitungsverfahren basierend auf der Rich-Communication-Suite, RCS, das auf ein Endgerät angewandt wird, auf dem ein Zielkonto angemeldet ist, und folgende Schritte umfasst:
Senden (S401) von Abfrageanforderungsinformationen an einen Server, wobei die Abfrageanforderungsinformationen Kontoinformationen des Zielkontos und Informationen über ein Abfrageobjekt umfassen; und
Empfangen (S402) von Zielinformationen, die von dem Server übertragen werden, wobei die Zielinformationen Informationen sind, die den Informationen über das Abfrageobjekt in Statusinformationen entsprechen, die von einem ersten Kontosatz und einem zweiten Kontosatz freigegeben werden, wobei der erste Kontosatz ein Kontosatz ist, der in einer voreingestellten Datenbank bestimmt wird, der eine Freundschaftsbeziehung mit dem Zielkonto hat, und der zweite Kontosatz ein Kontosatz ist, der in der voreingestellten Datenbank bestimmt wird, der eine voreingestellte Beziehung mit Konten in dem ersten Kontosatz hat,
wobei der zweite Kontensatz einen ersten Kontenuntersatz umfasst, der in einer Freundschaftsbeziehung zu den Konten in dem ersten Kontensatz steht,
**dadurch gekennzeichnet, dass** der zweite Kontensatz ferner einen zweiten Kontenuntersatz umfasst, der in einer Freundschaftsbeziehung zu den Konten im ersten Kontenuntersatz steht.
die Informationen über das Abfrageobjekt Informationen über eine selbstfahrende Route sind, und das Empfangen (S402) von Zielinformationen, die von dem Server übertragen werden, das Empfangen von Informationen umfasst, die sich auf Adressinformationen von entsprechenden Knoten auf der selbstfahrenden Route in den Statusinformationen beziehen.

4. Verfahren nach Anspruch 3, wobei die Abfrageanforderungsinformationen ferner Informationen über eine Abfragezeit umfassen und die Zielinformationen Informationen sind, die den Informationen über das Abfrageobjekt in den Statusinformationen innerhalb der Abfragezeit entsprechen.

5. Server (800), der einen Speicher (803), einen Prozessor (801) und ein in dem Speicher (803) gespeichertes und von dem Prozessor (801) ausführbares Computerprogramm umfasst, wobei der Prozessor (801) das Programm ausführt, um das RCS-basierte Informationsverarbeitungsverfahren nach einem der Ansprüche 1 bis 2 zu implementieren.

6. Endgerät (900) mit einem Speicher (902), einem Prozessor (901) und einem Computerprogramm, das in dem Speicher (902) gespeichert und von dem Prozessor (901) ausführbar ist, wobei der Prozessor (901) das Programm ausführt, um das RCS-basierte Informationsverarbeitungsverfahren nach einem der Ansprüche 3 bis 4 zu implementieren.

7. Computerlesbares Speichermedium, auf dem ein Computerprogramm gespeichert ist, wobei das Programm von einem Prozessor ausgeführt wird, um das RCS-basierte Informationsverarbeitungsverfahren nach einem der Ansprüche 1 bis 4 zu implementieren.

## Revendications

1. Procédé de traitement de l'information basée sur la Rich Communication Suite, RCS, qui est appliqué à un serveur et comprend les étapes suivantes :
recevoir (S201) des informations de demande de requête envoyées par un terminal cible, le terminal cible étant un terminal sur lequel un compte cible est connecté, et les informations de demande de requête comprenant des informations de compte du compte cible et des informations sur un objet de requête ;
déterminer (S202), dans une base de données prédéfinie en fonction des informations de compte du compte cible, un premier ensemble de comptes en relation amicale avec le compte cible, et un deuxième ensemble de comptes ayant une relation prédéfinie avec les comptes dans le premier ensemble de comptes ;
acquérir (S203) les informations d'état publiées par le premier ensemble de comptes et le deuxième ensemble de comptes ; et
déterminer (S204) les informations correspondant aux informations sur l'objet de requête dans les informations d'état en tant qu'informations cibles, et transmettre (S204) les informations cibles au terminal cible,
dans lequel le deuxième ensemble de comptes comprend un premier sous-ensemble de comptes en relation amicale avec les comptes du premier ensemble de comptes,
**caractérisé en ce que** le deuxième ensemble de comptes comprend en outre un deuxième sous-ensemble de comptes en relation amicale avec les comptes du premier sous-ensemble de comptes,
les informations sur l'objet de requête sont des informations sur un itinéraire de conduite autonome et l'étape consistant à déterminer (S204) les informations correspondant aux informations sur l'objet de requête dans les informations d'état en tant qu'informations cibles comprend :
acquérir des informations d'adresse de noeuds respectifs sur l'itinéraire de conduite autonome, et déterminer des informations liées aux informations d'adresse des noeuds respectifs sur l'itinéraire de conduite autonome dans les informations d'état en tant qu'informations cibles.

2. Procédé selon la revendication 1, dans lequel les informations sur l'objet de requête comprennent en outre des informations sur un délai de requête, et les informations cibles sont des informations correspondant aux informations sur l'objet de requête dans les informations d'état au cours du délai de requête.

3. Procédé de traitement de l'information basée sur Rich Communication Suite, RCS, appliquée à un terminal sur lequel un compte cible est connecté et comprenant les étapes suivantes :
transmettre (S401) des informations de demande de requête à un serveur, les informations de demande de requête comprenant des informations sur le compte cible et des informations sur un objet de requête ; et
recevoir (S402) des informations cibles poussées par le serveur, les informations cibles correspondant aux informations sur l'objet de requête dans les informations d'état publiées par un premier ensemble de comptes et un deuxième ensemble de comptes, le premier ensemble de comptes étant un ensemble de comptes déterminé dans une base de données prédéfinie qui a une relation amicale avec le compte cible, et le deuxième ensemble de comptes étant un ensemble de comptes déterminé dans la base de données prédéfinie qui a une relation prédéfinie avec les comptes dans le premier ensemble de comptes,
le deuxième ensemble de comptes comprend un premier sous-ensemble de comptes en relation amicale avec les comptes du premier ensemble de comptes,
**caractérisé en ce que** le deuxième ensemble de comptes comprend en outre un deuxième sous-ensemble de comptes en relation amicale avec les comptes du premier sous-ensemble de comptes.
les informations sur l'objet de requête sont des informations sur un itinéraire de conduite autonome, et recevoir (S402) des informations sur la cible poussées par le serveur comprend recevoir des informations relatives aux adresses des noeuds respectifs sur l'itinéraire de conduite autonome dans les informations d'état.

4. Procédé selon la revendication 3, dans lequel les informations sur l'objet de requête comprennent en outre des informations sur un délai de requête, et les informations cibles sont des informations correspondant aux informations sur l'objet de requête dans les informations d'état au cours du délai de requête.

5. Serveur (800) comprenant une mémoire (803), un processeur (801) et un programme informatique stocké dans la mémoire (803) et exécutable par le processeur (801), dans lequel le processeur (801) exécute le programme pour mettre en oeuvre le procédé de traitement des informations basée sur le RCS selon l'une des revendications 1 à 2.

6. Terminal (900), comprenant une mémoire (902), un processeur (901) et un programme informatique stocké dans la mémoire (902) et exécutable par le processeur (901), dans lequel le processeur (901) exécute le programme pour mettre en oeuvre le procédé de traitement des informations basée sur le RCS selon l'une des revendications 3 à 4.

7. Support de stockage lisible par ordinateur contenant un programme informatique, dans lequel le programme est exécuté par un processeur pour mettre en oeuvre le procédé de traitement des informations basée sur le RCS selon l'une des revendications 1 à 4.
